(19) Europäisches Patentamt
European Patent Office
Office européen des brevets

(11) **EP 1 808 619 B1**

(12) **EUROPEAN PATENT SPECIFICATION**

(45) Date of publication and mention
of the grant of the patent:
**05.09.2012 Bulletin 2012/36**

(51) Int Cl.:
*F16H 57/02* (2012.01)  *F16H 3/60* (2006.01)
*F16H 37/02* (2006.01)

(21) Application number: **05805253.1**

(22) Date of filing: **25.10.2005**

(86) International application number:
**PCT/JP2005/019545**

(87) International publication number:
**WO 2006/049034 (11.05.2006 Gazette 2006/19)**

(54) **FORWARD-REVERSE SWITCHING DEVICE FOR STEPLESS SPEED CHANGER**

VOR- UND ZURÜCKSCHALTUNGSVORRICHTUNG FÜR STUFENLOSEN GANGWECHSLER

DISPOSITIF DE COMMUTATION AVANT-ARRIERE POUR SYSTEME DE CHANGEMENT DE VITESSES SANS PALIER

(84) Designated Contracting States:
**DE FR GB**

(30) Priority: **02.11.2004 JP 2004318661**

(43) Date of publication of application:
**18.07.2007 Bulletin 2007/29**

(73) Proprietors:
• **DAIHATSU MOTOR COMPANY, LTD.**
**Ikeda-shi,**
**Osaka-fu 563-8651 (JP)**
• **TOYOTA JIDOSHA KABUSHIKI KAISHA**
**Toyota-shi,**
**Aichi-ken, 471-8571 (JP)**

(72) Inventors:
• **SHIMAMOTO, Masao**
**Daihatsu Motor Co., Ltd.**
**Ikeda-shi, Osaka 5638651 (JP)**
• **HABUCHI, Ryoji**
**TOYOTA JIDOSHA KABUSHIKI KAISHA**
**Aichi 4718571 (JP)**
• **TAKAHARA, Hideaki**
**TOYOTA JIDOSHA KABUSHIKI KAISHA**
**Aichi 4718571 (JP)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
JP-A- 1 283 458    JP-A- 2 134 450
JP-A- 4 258 528    JP-A- 7 174 198
JP-A- 8 326 850    JP-A- 8 326 850
JP-A- 10 184 834    JP-A- 2002 327 828
US-A1- 2002 115 523

EP 1 808 619 B1

## Description

Field of the Invention

The present invention relates to a forward backward changeover device for continuously variable transmission, and in particular to a forward backward changeover device having a planetary gear set, a reverse brake and a direct-coupling clutch.

Background of the Invention

The document 1 discloses a continuously variable transmission comprising a forward backward changeover device, a belt-type continuously variable ratio-change unit and a differential gear unit. The forward backward changeover device has a single-pinion type planetary gear set whose sun gear is coupled to an input-side member and whose ring gear is coupled to an output-side member, a reverse brake for holding a carrier with respect to a transmission casing and a direct-coupling clutch for engaging the carrier with the sun gear. For forward drive, the reverse brake of the forward backward changeover device is applied, while the direct-coupling clutch is disengaged, so that the rotation inputted from the input-side member is transmitted to the output-side member as reversed and decelerated rotation. For backward drive, the direct-coupling clutch of the forward backward changeover device is engaged, while the reverse brake thereof is released, so that the input-side member is coupled directly to the output-side member.

The above-mentioned continuously variable transmission has a triaxial structure including a first axis for supporting a driver pulley, a second axis for supporting a driven pulley in the belt-type continuously variable ratio-change unit, and a third axis in the differential gear unit. Accordingly, at the time of forward drive, the driving rotation of engine is reversely transmitted to the driver pulley via the forward backward changeover device, and further transmitted from the driven pulley to the output shaft via the differential gear unit, so that the output shaft can be driven in the same rotational direction as that of the engine. By means of this triaxial structure, a simple and compact continuously variable transmission can be obtained. Further, in the forward drive, due to the deceleration by the forward backward changeover device at a stage prior to the belt-type ratio-change unit, the increase of the rotational speed of the driver pulley can be suppressed even when the engine speed becomes higher, serving to reduce transmission loss.

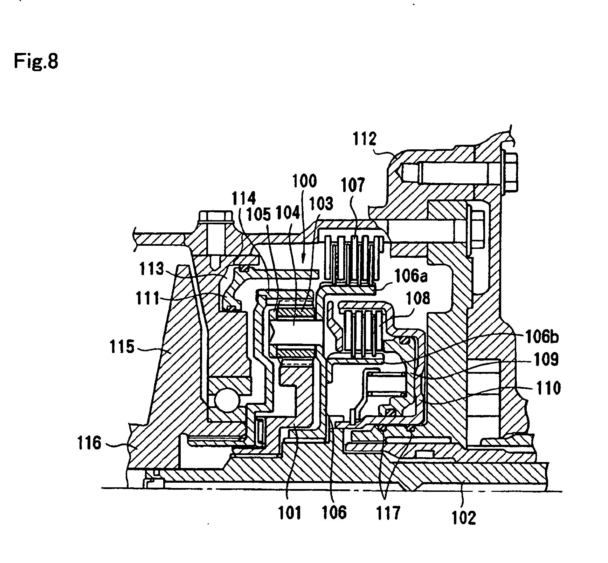

Fig. 8 illustrates a structure of a forward backward changeover device as described in the document 1. A planetary gear set 100 implemented in a forward backward changeover device has a sun gear 101, which is coupled to an input shaft 102, a carrier 105, and a pinion gear 103 which is meshed with the sun gear 101 and is rotatably supported by the carrier 105 via a pinion shaft 104. A disc shaped carrier plate 106 is fixed in front of the carrier 105. The inner peripheral portion of the carrier plate 106 is rotatably supported by the input shaft 102 while the outer peripheral portion thereof is formed as a brake-hub 106a of a reverse brake 107. A clutch hub 106b of a direct-coupling clutch 108 is fixed on the intermediate portion of the carrier plate 106. A hydraulic piston 109 for engaging clutch discs of the direct-coupling clutch 108 is arranged inside of a clutch drum 110, and the end of the inner cylindrical portion of the clutch drum 110 is coupled to the input shaft 102. A hydraulic piston 111 for clamping brake discs of the reverse brake 107 is received in a concave portion 113, which is formed in an inner wall of a transmission casing 112. A ring gear 114 meshing with the pinion gear 103 has an inner peripheral portion, which is coupled to a pulley axis 116 of a driver pulley 115 by spline engagement.

In the above described arrangements, because the clutch drum 110 constituting hydraulic actuator for engaging the direct-coupling clutch 108 rotates integrally with the input shaft 102, a sealing ring 117 for preventing oil leakage should necessarily be arranged in the oil supply passage fluidly connected to the clutch drum 110, thus raising a problem of increased friction resistance. Also, due to the rotation of the clutch drum 110, centrifugal oil pressure is generated in the hydraulic chamber formed inside of the clutch drum 110, raising another problem that hydraulic control becomes more complicated. Further, in order to couple the clutch drum 110 to the input shaft 102, the clutch drum 110 should be formed in a shape bended at several stages, raising further problems of complicated shape, high production cost and deteriorated torque transmission.

The continuously variable transmission as disclosed in document 2 has the same kind of problems as described above in connection with the document 1. The continuously variable transmission of the document 2 has a quatreaxial structure, in which a forward backward changeover device is arranged between an input shaft and a driver pulley, and in which a driven pulley is connected to a differential gear unit via a reduction gear to transmit the driving rotation.

This forward backward changeover device includes a double-pinion type planetary gear set, a direct-coupling clutch arranged between an input shaft and a carrier, and a reverse brake arranged between a ring gear and a transmission casing. A sun gear is coupled to an input shaft serving as the input-side member, and the carrier is coupled to a driver pulley serving as the output-side member. For forward drive, the direct-coupling clutch is engaged so that the input shaft and the driver pulley is directly coupled. Thus, the rotation of the input shaft is transmitted as it is to the driver pulley, and transmitted further to the differential unit via the driven pulley and the reduction gear. For backward drive, the reverse brake is applied so that the rotation of the input shaft is reversely transmitted to the driver pulley, and transmitted further to the differential unit via the driven pulley and the reduction gear.

In the case of this continuously variable transmission, as well, a clutch drum of a hydraulic actuator for engaging the direct-coupling clutch rotates integrally with the input shaft, raising problems that a increased frictional resistance is caused by sealing rings and that centrifugal oil pressure due to the rotation of the clutch drum is generated within the hydraulic chamber of the clutch drum. Also, in order to implement such a direct-coupling clutch, a further problem that the clutch drum should necessarily be formed in a complicated shape again raises.

Document 1: JP2002-327828 A
Document 2: JP10-184834 A

The document JP 2002 327828 discloses all the features of the preamble of claim 1. The document US 2002/115523 A1 discloses all the features of the preamble of claim 2.

Summary of the invention

Problems to be solved by the invention

Accordingly, an object of the present invention is to provide a forward backward changeover device for a continuously variable transmission, which has a reduced friction resistance and whose construction is simple and compact, by means of arranging a hydraulic actuator of a direct-coupling clutch on a stationary member.

In order to achieve the above-mentioned object, the present invention provides a forward backward changeover device for a continuously variable transmission comprising a planetary gear set, a reverse brake and a direct-coupling clutch. A sun gear of the planetary gear set is coupled to an input-side member, while one of a carrier or a ring gear of the planetary gear set is coupled to an output-side member. The reverse brake is arranged between a transmission casing and the other of the carrier or the ring gear, while the direct-coupling clutch is arranged between the carrier and the sun gear or the input-side member. The reverse brake and the direct-coupling clutch are selectively engaged so as to perform a forward backward changeover operation. A hydraulic actuator for engaging the direct-coupling clutch is mounted on the transmission casing or on a stationary member fixed to the transmission casing, and a thrust bearing for allowing relative rotation between a piston of the hydraulic actuator and a clutch disc of the direct-coupling clutch is arranged therebetween to transmit an axial force from the piston to the clutch disc.

As an example, the present invention will be explained herebelow with a case in which a single-pinion type planetary gear set is used. A ring gear of the planetary gear set is coupled to an output-side member. A reverse brake is arranged between a carrier and a transmission casing, and a direct-coupling clutch is arranged between the carrier and a sun gear. In this case, when the reverse brake is applied and the direct-coupling clutch is disengaged, the rotation inputted from an input-side member (a torque converter, for example) is reversely and deceleratedly transmitted to an output-side member (a driver pulley, for example) to attain a forward driving. On the contrary, when the direct-coupling clutch is engaged and the reverse brake is released, the input-side member and the output-side member are directly coupled to establish a backward driving. Thus a compact triaxial structure is obtained.

Because the hydraulic actuator for engaging the direct-coupling clutch is mounted on a stationary member, sealing rings for preventing oil leakage is not required in the oil supply passage connected to the clutch so that the frictional resistance caused by the sealing rings can be eliminated. Further, because centrifugal oil pressure due to the rotation is not generated within the hydraulic actuator, it becomes easy to perform the hydraulic control, and it becomes unnecessary to provide a check-ball, for example, for releasing centrifugal oil pressure loaded on the piston. Because the hydraulic chamber of the direct-coupling clutch is formed on a stationary member such as a transmission casing, the clutch drum does not have to have a complicated shape, leading to advantages that the clutch drum can be simplified in shape and the production cost thereof can be reduced. Due to the fact that the hydraulic actuator is mounted on a stationary member, the hydraulic piston does not rotate, either. Although the relative rotation between the piston and the clutch disc of the direct-coupling clutch necessarily occurs when the hydraulic piston becomes in pressure contact with the clutch disc, the thrust bearing arranged between the clutch disc and the hydraulic piston can allow this relative rotation. Thus, the axial force caused by the piston is effectively transmitted to the clutch disc, while the piston is prevented from being dragged by the clutch disc. In the present invention, the clutch disc includes driver and/or driven frictional plate members. The thrust bearing can be realized by a roller bearing, a ball bearing or any arbitrary bearing, as far as it allows the relative rotation between the piston and the clutch disc while it transmits the axial force.

The forward backward changeover device of the present invention can also be realized by using a double-pinion type planetary gear set whose carrier is coupled to an output-side member, a reverse brake arranged between a ring gear and a transmission casing, and a direct-coupling clutch arranged between the carrier and a sun gear. In this case, when the direct-coupling clutch is engaged and the reverse brake is released, the forward backward changeover device comes into a forward driving state. On the contrary, when the reverse brake is applied and the direct-coupling clutch is disengaged, the forward backward changeover device comes into a backward driving state. Thus, a quatreaxial structure can be obtained.

The following table 1 shows the forward backward changeover devices using a single pinion type planetary gear set and a double pinion type planetary gear set.

[table 1]

| axial construction | triaxial | quatreaxial |
|---|---|---|
| planetary gear set | single-pinion type | double-pinion type |
| sun gear | coupled to input-side member | coupled to input-side member |
| carrier | ... | coupled to output-side member |
| ring gear | coupled to output-side member | ... |
| direct-coupling clutch | arranged between carrier and sun gear | arranged between carrier and sun gear |
| reverse brake | arranged between carrier and casing | arranged between ring gear and casing |

The hydraulic actuator for engaging the direct-coupling clutch may preferably have a cylindrical portion defined at a backside of an oil pump cover, which is fixed to the transmission casing and is arranged axially adjacent to the direct-coupling clutch. When the direct-coupling clutch is arranged in front of the carrier (nearer to the engine than the carrier), the oil pump cover fixed to the transmission casing may be positioned in front of the direct-coupling clutch adjacent thereto. In this case, the cylindrical portion of the hydraulic actuator can be formed integrally at the backside of this oil pump cover as a recessed portion in the oil pump cover, so that the axial size of the hydraulic actuator can be shortened. Moreover, in this case, hydraulic counteraction of the hydraulic actuator acts to press the oil pump cover toward an oil pump body, so that sealing performance of the oil pump can be improved.

The carrier may preferably include a cylindrical portion, whose outer toothed wall engages an inner peripheral portion of a brake disc of the reverse brake by spline connection, and whose inner toothed wall engages an outer peripheral portion of a clutch disc of the direct-coupling clutch by spline connection. In short, the carrier preferably includes the cylindrical portion, which acts as a brake hub of the reverse brake and as a clutch drum of the direct-coupling clutch. In case of the document 1, the disc shaped carrier plate is fixed in front of a carrier, such that the inner peripheral portion of the carrier plate is rotatably supported by the input shaft, while the outer peripheral portion of the carrier plate is formed as the brake hub of the reverse brake. In addition, the clutch hub for the direct-coupling clutch is fixed in the intermediate portion of the carrier plate. In this way, it is necessary to provide the carrier with two hubs, raising the problems that the structure of the changeover device may become complicated and that mechanical strength of the hubs may become lower. Contrary to this prior art, if the carrier includes a cylindrical portion serving both as a brake hub and as a clutch drum, it is sufficient to form only one cylindrical portion, leading to advantages that the structure becomes simple, that mechanical strength of the cylindrical portion can easily be obtained, and that transmission space efficiency is improved. Especially, when the outer toothed wall and the inner toothed wall are formed on the cylindrical portion axially overlapping each other, the axial size of the forward backward changeover device can be more shortened.

The carrier may preferably include a toothless portion partially formed at the inner toothed wall of the cylindrical portion, so that a pinion hole for supporting a pinion shaft is formed at a position of the carrier corresponding to the toothless portion in the circumferential direction in such a way that a radial distance R between the pinion hole and a bottom surface of the toothless portion is smaller than a radial height T of a tooth of the inner toothed wall. In this case, because the pinion hole can be formed close to the inner surface of the cylindrical portion, the radial size of the forward backward changeover device can be reduced.

The sun gear may preferably include a cylindrical portion, whose outer toothed wall engages an inner peripheral portion of the clutch disc of the direct-coupling clutch, by spline connection. In short, the cylindrical portion serving as a clutch hub of the direct-coupling clutch may preferably be provided on the sun gear. In the document 1, the direct-coupling clutch is arranged between a clutch drum coupled to the input shaft and the carrier. This leads to a disadvantage that the clutch drum necessarily has a complicated shape, and the direct-coupling clutch also has a complicated structure occupying a large space. On the contrary, if the cylindrical portion is provided on the sun gear at its axial ends so as to serve as the clutch hub of the direct-coupling clutch, and if the direct-coupling clutch is arranged between the sun gear and the carrier, it leads to an advantage that a component member having a complicated shape like the known clutch drum is not required, so that the structure of the forward backward changeover device becomes simple and compact in size.

A stopper portion for stopping the axial end of the brake disc of the reverse brake may preferably be formed on a stationary member fixed to the transmission casing. Because the brake discs are pressed axially by a hydraulic piston, a snap ring is conventionally attached into a groove formed inside of the transmission casing in order to stop the axial end of the brake disc. However, because the position of the snap ring attached in the groove and the position of the snap ring for receiving the pressure necessarily offset in the radial direction, the snap ring tends to deform. As a result, it is required to arrange a thick end plate between the snap ring and the brake disc, leading to a disadvantage in space occupation. Contrary to this known art, if the stationary member fixed to the transmission casing stops the axial end of the brake disc, it leads to an advantage that the snap ring can be eliminated and the deformation of the brake disc can be reduce so as to improve the endurance of the brake disc, because the axial force brought by the hydraulic piston can be received by the stationary member in opposing manner. The stationary member for forming the stopper portion should preferably be a member located at a position opposite to the hydraulic piston beyond the brake disc of the reverse brake. If the hydraulic piston is positioned at the backside (farther from the engine) of the planetary gear set, the stationary member should be positioned at the front side (nearer to the engine) of the planetary gear set. For example, the oil cover can be used as this stationary member. The brake disc of this invention includes driver and/or driven frictional plate members.

A stopper portion for stopping the axial end of the clutch disc of the direct-coupling clutch may preferably be formed on the carrier of the planetary gear set. The hydraulic actuator for engaging the direct-coupling clutch is mounted on a stationary member, so that the clutch disc is pressed in the axial direction by the hydraulic actuator. If a conventional snap ring is used for stopping the axial end of the clutch disc, the above-mentioned disadvantage will also occur like in the case of the brake disc. On the contrary, if the stopper portion is formed on the carrier, the snap ring can be eliminated, leading to an advantage that the deformation of the clutch disc can be reduced so as to improve the endurance of the clutch disc, because the axial force brought by the hydraulic piston can be received by the stopper portion in opposing manner.

Effect of the Invention

According to the present invention, because the hydraulic actuator for engaging the direct-coupling clutch is mounted on a stationary member, a sealing ring for preventing oil leakage is not required in the oil supply passage to the clutch, enabling to reduce the friction resistance. Because centrifugal oil pressure due to the rotation is not generated in the hydraulic actuator, it becomes easy to perform the hydraulic control, and it becomes unnecessary to provide a check-ball, for example, for releasing centrifugal oil pressure in the piston. Further, because the hydraulic chamber is formed on a stationary member such as a transmission casing, the clutch drum does not have to have a complicated shape, leading to an advantage that the production cost thereof can be reduced.

Brief Description of the Drawings

Fig.1 is an expanded sectional view of a continuously variable transmission according to a first embodiment of the present invention;
Fig.2 is a skeleton diagram of the continuously variable transmission as shown in Fig. 1;
Fig.3 is a detailed sectional view of a forward backward changeover device for the continuously variable transmission as shown in Fig. 1;
Fig. 4 is a front elevational view of a planetary gear set in the forward backward changeover device;
Fig. 5 is a sectional view taken along the line V-V in Fig. 4;
Fig. 6 is a sectional view taken along the line VI-VI in Fig. 5;
Fig. 7 is a skeleton diagram of a forward backward changeover device according to a second embodiment of the present invention; and
Fig. 8 is a sectional view of a forward backward changeover device for a continuously variable transmission according to the prior arts.

DESCRIPTION OF THE PREFERRED EMBODIMENTS

The preferred embodiments of the present invention will be described with reference to the accompanying drawings.

-Embodiment 1-

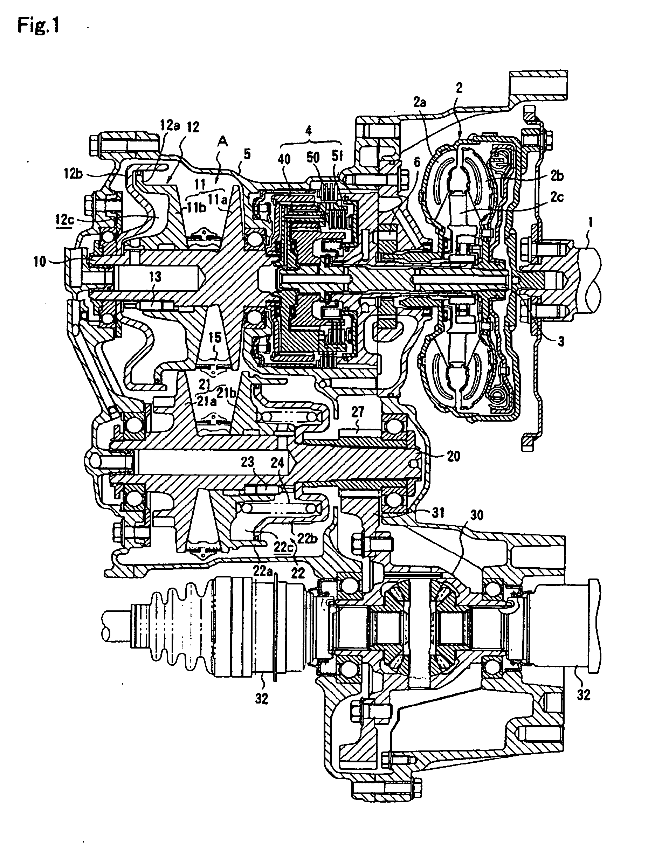

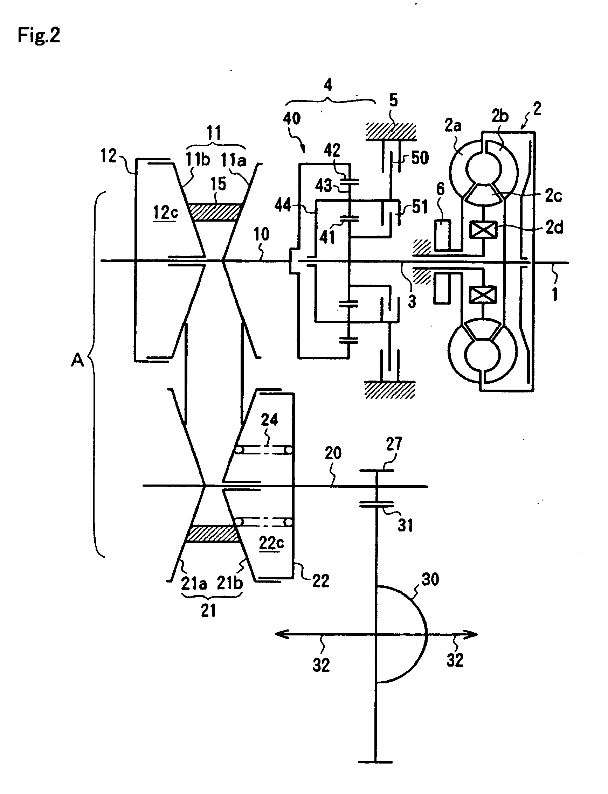

Figs. 1 to 3 show a continuously variable transmission according to a first embodiment of the present invention.

The continuously variable transmission according to this embodiment is employed in a vehicle having a transversely mounted FF (front engine-front drive) system. It generally comprises an input shaft 3 driven by an engine output shaft 1 via a torque converter 2, a forward backward changeover device 4 for changing the rotation of the input shaft 3 to transmit it to a driver shaft 10, a continuously variable ratio-change unit A having a driver pulley 11 and a driven pulley 21 together with an endless V-belt 15 running around both pulleys, and a differential gear unit 30 for transmitting the driving rotation at the driven shaft 20 onto an output shaft 32. The input shaft 3 and the driver shaft 10 are aligned coaxially, whereas the driven shaft 20 and the output shaft 32 of the differential unit 30 are arranged non-coaxially, but in parallel to the input shaft 3. Accordingly, this continuously variable transmission has a triaxial structure as a whole. The V-belt 15 used in this embodiment is a known metallic belt including endless tension members and a number of blocks supported thereon.

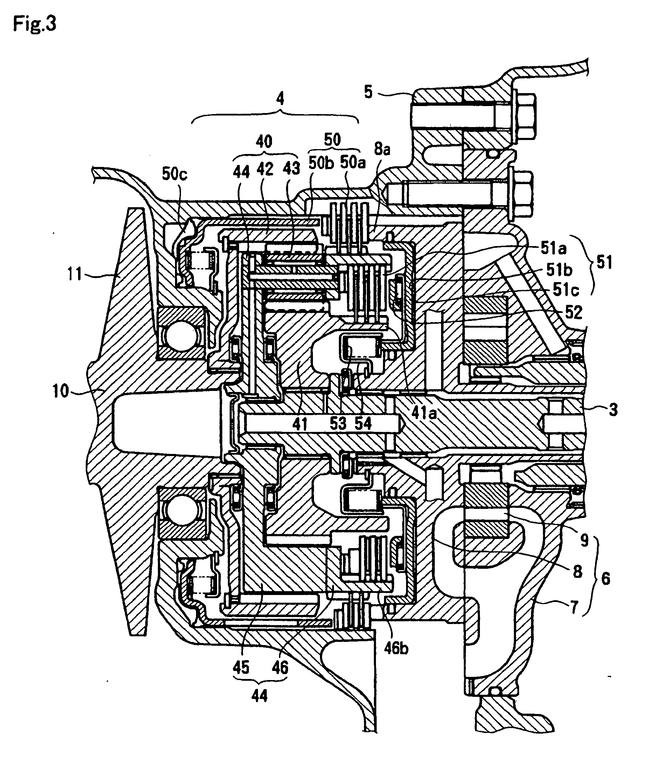

Each component of the continuously variable transmission is enclosed within a transmission casing 5. An oil pump 6 is arranged between the torque converter 2 and the forward backward changeover device 4. As shown in Fig. 3, this oil pump includes a pump body 7 fixed to the transmission casing 5, a pump cover 8 fixed with respect to the pump body 7, and a pump gear 9 arranged between the pump body 7 and the pump cover 8. The pump gear 9 is driven by a pump impeller 2a of the torque converter 2. A turbine-runner 2b of the torque converter 2 is coupled to the input shaft 3, whereas a stator 2c is supported by the transmission casing 5 via a one-way clutch 2d.

As shown in Fig. 3, the forward backward changeover device 4 includes a planetary gear set 40, a reverse brake 50 and a direct-coupling clutch 51. A sun gear 41 of the planetary gear set 40 is coupled to the input shaft 3 acting as an input-side member, whereas a ring gear 42 is coupled to the driver shaft 10 acting as an output-side member. This planetary gear set 40 is constructed as a single-pinion type, in which the reverse brake 50 is arranged between a carrier 44 supporting a pinion gear 43, and the transmission casing 5. The direct-coupling clutch 51 is arranged between the carrier 44 and the sun gear 41. When the direct-coupling clutch 51 is disengaged and the reverse brake 50 is applied, the rotation of the input shaft 3 is transmitted reversely and deceleratedly to the driver shaft 10. On the contrary, when the reverse brake 50 is released and the direct-coupling clutch 51 is engaged, the carrier 44 and the sun gear 41 of the planetary gear set 40 are rotated integrally, so that the input shaft 3 and the driver shaft 10 are directly coupled. The structure of the forward backward changeover device 4 will be explained more specifically later.

The driver pulley 11 of the continuously variable ratio-change unit A includes a fixed sheave 11a formed integrally with the driver shaft (pulley shaft) 10, a movable sheave 11b supported on the driver shaft 10 via a roller spline 13 in such a way that it can freely slide with respect to the driver shaft 10 in the axial direction while it can also rotate integrally with the driver shaft 10, and a hydraulic servo 12 formed behind the movable sheave 11b. The movable sheave 11b has a piston portion 12a extending backwardly, which is formed integrally with the movable sheave 11b at its outer periphery. The outer periphery of this piston portion 12a slidably contacts with an inner surface of a cylinder member 12b fixed to the driver shaft 10. The hydraulic servo 12 has an operating oil chamber 12c formed between the movable sheave 11b and the cylinder member 12b, such that the ratio changing operation is performed by controlling the oil pressure fed into this oil chamber 12c.

The driven pulley 21 includes a fixed sheave 21a formed integrally with the driven shaft (pulley shaft) 20, a movable sheave 21b supported on the driven shaft 20 via a roller spline 23 in such a way that it can freely slide with respect to the driven shaft 20 in the axial direction while it can also rotate integrally with the driven shaft 20, and a hydraulic servo 22 formed behind the movable sheave 21b. The structure of this roller spline 23 is similar to that of the roller spline 13 of the driver pulley 11. The movable sheave 21b has a cylindrical portion 22a extending backwardly, which is formed integrally with the movable sheave 21b at its outer periphery. An inner surface of this cylindrical portion 22a slidably contacts with a piston member 22b fixed to the driven shaft 20. The hydraulic servo 22 has an operating oil chamber 22c formed between the movable sheave 21b and the piston member 22b, such that the axial force loaded on the belt for transmitting torque is adjusted by controlling the oil pressure fed into this oil chamber 22c. Further, a spring 24 for producing the initial axial force is arranged is this oil chamber 22c.

At one end of the driven shaft 20, which extends toward the engine, an output gear 27 is fixed. This output gear 27 meshes with a ring gear 31 of the differential gear unit 30 such that the torque is transmitted from the differential gear unit 30 to an output shaft 32, which extends both in left and right sides from the differential gear unit 30 to connect with driving wheels.

The specific structure of the forward backward changeover device 4 will be explained in detail herebelow referring to Figs. 3 to 6. The carrier 44 rotatably supported by the input shaft 3 includes a disc shaped carrier flange 45 and a ring shaped carrier rim 46. The carrier flange 45 has an inner peripheral portion extending radially inwardly between a sun gear 41 and a ring gear 42. The carrier flange 45 also has a plurality of (six in this embodiment) pillar portions 45a formed integrally therewith, which project axially toward the carrier rim 46. The pinion gears 43 are arranged in the spaces defined between these pillar portions 45a. The ends of the pillar portions 45a and the carrier rim 46 are diffusion bonded, such that the carrier flange 45 and the carrier rim 46 are fixed integrally. Instead, these members may also be fixed by welding, brazing or screw tightening.

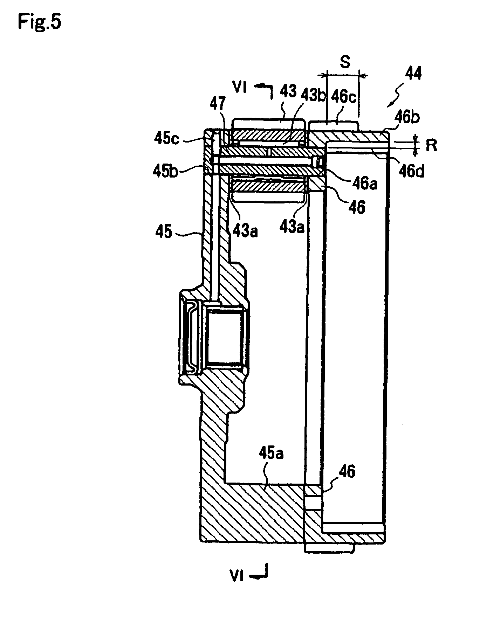

As shown in Fig.5, pinion holes 45b and 46a are formed in the carrier flange 45 and the carrier rim 46 respectively at the positions opposing to each other, such that both ends of pinion shafts 47 for supporting the pinion gear 43 are inserted into these pinion holes 45b and 46a respectively. Thrust washers 43a are arranged between the pinion gear 43 and the carrier flange 45, and between the pinion gear 43 and the carrier rim 46 respectively. Also, needle bearings 43b are arranged between the inner cylindrical surface of the pinion gear 43 and the outer cylindrical surface of the pinion shaft 47, such that the pinion gear 43 is rotatable with respect to the pinion shaft 47. One end of the pinion shaft 47, which is inserted into the pinion hole 45b of the carrier flange 45, is held stably both in its axial direction and in its rotational direction by means of a roller pin 45c. The roller pin 45c is rigidly inserted into the carrier flange 45 from outside in the radial direction.

As shown in Fig. 5, the carrier rim 46 has a cylindrical portion 46b formed integrally therewith, which projects forwardly (toward the engine) in the axial direction. This cylindrical portion 46b acts both as a brake hub of the reverse brake 50 and as a clutch drum of the direct-coupling clutch 51. More specifically, the cylindrical portion 46b has an outer toothed wall 46c so as to engage inner peripheral portion of a brake disc 50a of the reverse brake 50 by spline connection. Further, the cylindrical portion 46b has an inner toothed wall 46d to engage outer peripheral portion of a clutch disc 51a of the direct-coupling clutch 51 by spline connection. In this way, the toothed walls 46c and 46d are formed on outer and inner surfaces of the cylindrical portion 46b respectively at the positions radially opposing to each other, such that these toothed walls axially overlap by a space S. As a result, the axial length of the cylindrical portion 46b can be reduced correspondingly. Moreover, because the reverse brake 50 and the direct-coupling clutch 51 can be arranged on the outer side and the inner side of the cylindrical portion 46b respectively, the space in the radial direction can be reduced.

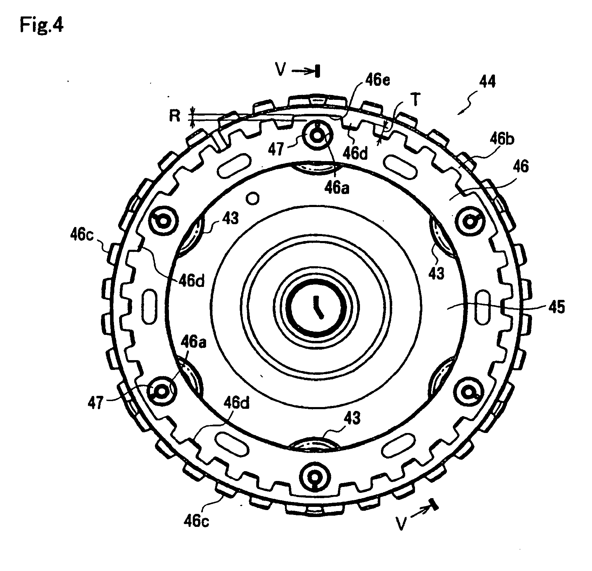

As shown in Fig. 4, on the inner surface of the cylindrical portion 46b of the carrier rim 46, toothless portions 46e are partially formed at prescribed intervals, and the pinion holes 46a are formed at positions corresponding to these toothless portions 46e in the circumferential direction. A radial distance R between the pinion hole 46a and a bottom surface of the toothless portion 46e is smaller than a radial height T of the tooth of the inner toothed wall 46d:

$$R < T$$

Therefore, the pinion hole 46a can be positioned near the inner surface of the cylindrical portion 46b, so that the forward backward changeover device 4 can be reduced in size in the radial direction.

As shown in Fig. 3, a piston 50b of the reverse brake 50 is received in a hydraulic chamber 50c recessed in an inner wall of the transmission casing 5, such that the piston 50b is actuated in response to the oil pressure fed into this hydraulic chamber 50c to clamp the brake disc 50a. A cylindrical stopper 8a is integrally formed with the pump cover 8, used as a stationary member, in an axially protruding manner in order to stop the axial end of the brake disc 50a when it is pushed by the piston 50b. Thus, a snap ring for stopping the end of the brake disc 50a can be omitted.

As shown in Fig. 3, the sun gear 41 has a cylindrical portion 41a, which is integrally formed at the front side (toward the engine) thereof in an axially protruding manner, so as to be used as clutch hub of the direct-coupling clutch 51. An inner peripheral portion of the clutch disc 51a is supported by an outer toothed wall of this cylindrical portion 41a. A hydraulic chamber 51b as a recessed portion is formed at the backside of the pump cover 8 (at a side nearer to the forward backward changeover device), such that the piston 51c is actuated in response to the oil pressure fed into this hydraulic chamber 51b to engage the direct-coupling clutch 51. The piston 51c has a transversely U-shaped section. A thrust bearing 52 for allowing relative rotation between the piston 51c and the clutch disc 51a is arranged at the inside of the piston 51c opposing to the clutch disc 51a. Thus, the axial force caused by the piston 51c is effectively transmitted to the clutch disc 51a, while the piston 51c is prevented from being dragged by the clutch disc 51a of the direct-coupling clutch 51. Further, because the carrier 44 (the carrier rim 46) is arranged behind the clutch disc 51a, the axial end of the clutch disc 51a is stopped by an end portion of this carrier 44 (a side surface of the carrier rim 46) when the clutch disc 51a is pressed by the piston 51c, enabling to omit a snap ring or other counteraction members.

In the above-described continuously variable transmission, when the reverse brake 50 is applied and the direct-coupling clutch 51 is disengaged, the driving rotation inputted from the torque converter 2 is reversed and decelerated before it is transmitted to the driver pulley 11. Then, the driving rotation is transmitted further from the driven pulley 21 to the output shaft 32 via the differential unit 30, so as to rotate the output shaft 32 in the same rotational direction as that of the engine rotation, resulting in a forward drive state. On the contrary, when the direct-coupling clutch 51 is engaged and the reverse brake 50 is released, the input-side member (the sun gear 41) and the output-side member (the ring gear 42) of the planetary gear set 40 are directly coupled, so that the driving rotation inputted from the torque converter 2 is transmitted to the driver pulley 11 as it is. Then, the driving rotation is transmitted further from the driven pulley 21 to the output shaft 32 via the differential gear unit 30, so as to rotate the output shaft 32 in a direction reverse to that of the engine rotation, resulting in a backward drive state. In this way, a compact and triaxial continuously variable transmission can be obtained.

In this forward backward changeover device 4, because the hydraulic actuator for engaging the direct-coupling clutch 51 is mounted on a stationary pump cover 8, a sealing ring for preventing oil leakage is not required in the oil supply passage to the hydraulic actuator, enabling to reduce friction resistance. Moreover, because the clutch drum does not have to have a complicated shape, simple structure and low production cost can be realized. Further, because the cylindrical portion 46b of the carrier 44 acts both as a brake hub of the reverse brake 50 and as a clutch drum of the direct-coupling clutch 51, the structure of the carrier can be simplified, and mechanical strength of the cylindrical portion 46b can be achieved easily. Also, the construction of the device becomes space-effective in the axial direction. Furthermore, because the sun gear 41 has the cylindrical portion 41a for acting as clutch hub of the direct-coupling clutch 51, the structure of the direct-coupling clutch 51 can be simplified with less number of component elements, resulting in a more compact forward backward changeover device.

-Embodiment 2-

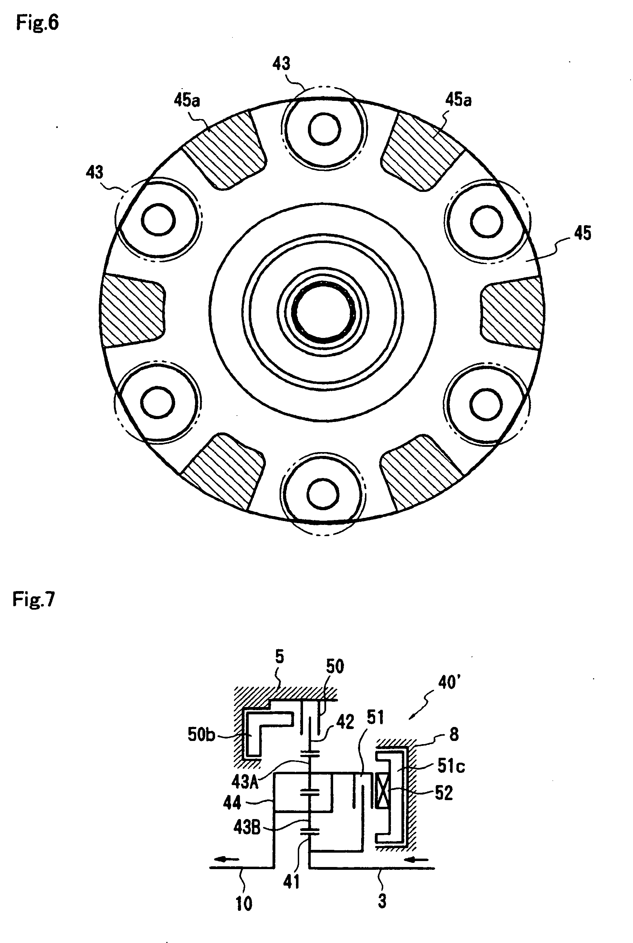

Fig. 7 shows a forward backward changeover device according to a second embodiment of the present invention. In Fig. 7, the elements corresponding to those in the first embodiment are assigned the same reference numerals so as to avoid redundant description. In this embodiment, the structure other than the forward backward changeover device has the same structures as those in the document 2. The planetary gear set 40' of this embodiment is formed as a double pinion type, in which two kinds of pinion 43A and 43B are supported at the carrier 44. The pinion 43A meshes with the ring gear 42 and the pinion 43B, while the pinion 43B meshes with the pinion 43A and the sun gear 41. The sun gear 41 is coupled to the input shaft 3, while the carrier 44 is coupled to the driver shaft 10. The reverse brake 50 is arranged between the ring gear 42 and the transmission casing 5, and the hydraulic piston 50b for actuating the reverse brake 50 is disposed in the transmission casing 5. The direct-coupling clutch 51 is arranged between the carrier 44 and the sun gear 41. The hydraulic piston 51c for actuating the direct-coupling clutch 51 is received in the oil pump cover 8. The thrust bearing 52 is disposed between the hydraulic piston 51c and the clutch disc of the direct-coupling clutch 51.

In this embodiment also, because the hydraulic actuator of the direct-coupling clutch 51 is mounted on the pump cover 8 serving as the stationary member, the sealing ring for preventing oil leakage can be omitted, enabling to reduce friction resistance. Moreover, because the direct-coupling clutch 51 is arranged not between the carrier 44 and the input shaft 3, but between the carrier 44 and the sun gear 41, the shape of the clutch drum can be simplified, so as to reduce the size of the direct-coupling clutch 51.

The present invention should not be limited to the forward backward changeover devices as shown in the foregoing embodiment, but can be variously modified in its specific construction within the scope of the claim and widely applied to various forward backward changeover devices. Although the foregoing embodiments of the present invention have exclusively exemplified the cases in which the pillar portions 45a are integrally formed with the carrier flange 45 of the planetary gear set, 40 and the circular carrier rim 46 is fixed to the ends of the pillar portions 45a, these pillar portions may be formed integrally with the carrier rim 46 so that the ends thereof are fixed to the carrier flange 45. Moreover, although the cylinder of the hydraulic actuator for engaging the direct-coupling clutch 51 is formed on the oil pump cover 8, the cylinder may be formed directly on the transmission casing 5 or on other stationary members instead of the oil pump cover 8.

**Claims**

1.    A forward backward changeover device for a continuously variable transmission comprising:

a planetary gear set (40) having a sun gear (41) coupled to an input-side member (3), a carrier (44) and a ring gear (42), wherein the planetary gear set is formed as a single pinion type planetary gear set, wherein the ring gear (42) is coupled to an output-side member (10);
a reverse brake (50) arranged between a transmission casing and the carrier (44), and
a direct-coupling clutch (51) arranged between the carrier (44) and the sun gear (41);
wherein the reverse brake (50) and the direct-coupling clutch (51) are selectively engaged to perform a forward backward changeover operation, the forward backward changeover device **characterised in** the
the carrier (44) includes a cylindrical portion (46b), whose inner toothed wall engages an outer peripheral portion of an outer clutch disc (51a) of the direct-coupling clutch (51) by spline connection,
the sun gear (41) includes a cylindrical portion (41a), whose outer toothed wall engages an inner peripheral portion of an inner clutch disc (51a) of the direct-coupling clutch (51) by spline connection,
a hydraulic actuator (8,51b,51c) for engaging the direct-coupling clutch (51) is mounted on the transmission casing or on a stationary member fixed to the transmission casing, and
a thrust bearing (52) for allowing relative rotation between a piston (51c) of the hydraulic actuator and the inner or outer clutch disc of the direct-coupling clutch (51) is arranged therebetween to transmit an axial force from the piston to the respective clutch disc.

2. A forward backward changeover device for a continuously variable transmission comprising:

a planetary gear set (40) having a sun gear (41) coupled to an input-side member (3), a carrier (44) and a ring gear (42) wherein the planetary gear set is formed as a double pinion type planetary gear set, wherein the carrier (44) is coupled to an output-side member (10);
a reverse brake (50) arranged between a transmission casing and the ring gear (42); and
a direct-coupling clutch (51) arranged between the carrier (44) and the sun gear (41);
wherein the reverse brake (50) and the direct-coupling clutch (51) are selectively engaged to perform a forward backward changeover operation, the forward backward changeover device **characterised in that**
the sun gear (41) includes a cylindrical portion (41a), whose outer toothed wall engages an inner peripheral portion of an inner clutch disc (51a) of the direct-coupling clutch (51) by spline connection,
a hydraulic actuator (8,51b,51c) for engaging the direct-coupling clutch (51) is mounted on the transmission casing or on a stationary member fixed to the transmission casing, and
a thrust bearing (52) for allowing relative rotation between a piston (51c) of the hydraulic actuator and the inner clutch disc or an outer clutch disc. clutch disc of the direct-coupling clutch (51) is arranged therebetween to transmit an axial force from the piston to the respective clutch disc.

3. The forward backward changeover device for the continuously variable transmission according to claim 1 or 2, wherein the hydraulic actuator for engaging the direct-coupling clutch (51) includes a cylinder means formed at the backside of an oil pump cover (8), which is fixed to the transmission casing and is arranged axially adjacent to the direct-coupling clutch (51).

4. The forward backward changeover device for the continuously variable transmission according to claim 1, wherein the carrier (44) includes the cylindrical portion (46b), whose outer toothed wall engages an inner peripheral portion of a brake disc of the reverse brake (50) by spline connection.

5. The forward backward changeover device for the continuously variable transmission according to claim 4, wherein the outer toothed wall and the inner toothed wall of the cylindrical portion (46b) of the carrier (44) are formed at positions overlapping each other in an axial direction.

6. The forward backward changeover device for the continuously variable transmission according to claim 4 or 5, wherein a toothless portion is partially formed at the inner toothed wall of the cylindrical portion (46b) of the carrier (44), and
wherein a pinion hole for supporting a pinion shaft is formed at a position of the carrier (44) corresponding to the toothless portion in the circumferential direction such that a radial distance (R) between the pinion hole and a bottom surface of the toothless portion is smaller than a radial height (T) of a tooth of the inner toothed wall.

7. The forward backward changeover device for the continuously variable transmission according to claim 1or 2, wherein a stopper means (8a) for stopping an axial end of the brake disc of the reverse brake (50) is formed on the stationary member fixed to the transmission casing.

8. The forward backward changeover device for the continuously variable transmission according to claim 1 or 2, wherein a stopper means for stopping an axial end of the clutch disc of the direct-coupling clutch (51) is formed on the carrier (44) of the planetary gear set (40).

**Patentansprüche**

1. Eine Vorwärts-Rückwärts-Umschaltvorrichtung für ein stufenloses Getriebe, die folgende Merkmale aufweist:

einen Planetenradsatz (40) mit einem Sonnenrad (41), das mit einem Eingangsseitenbauglied (3) gekoppelt ist, einem Träger (44) und einem Hohlrad (42), wobei der Planetenradsatz als ein Einzel-Ritzel-Typ-Planetenradsatz gebildet ist, wobei das Hohlrad (42) mit einem Ausgangsseitenbauglied (10) gekoppelt ist;
eine Rückbremse (50), die zwischen einem Getriebegehäuse und dem Träger (44) angeordnet ist; und
eine Direktkopplungskupplung (51), die zwischen dem Träger und dem Sonnenrad (41) angeordnet ist;
wobei die Rückbremse (50) und die Direktkopplungskupplung (51) selektiv in Eingriff sind, um eine Vorwärts-Rückwärts-Umschaltoperation durchzuführen, wobei die Vorwärts-Rückwärts-Umschaltvorrichtung **dadurch gekennzeichnet ist, dass**

der Träger (44) einen zylindrischen Abschnitt (46b) umfasst, dessen innere, mit Zähnen versehene Wand einen äußeren Umfangsabschnitt einer äußeren Kupplungsscheibe (51a) der Direktkopplungskupplung (51) durch Keilverbindung in Eingriff nimmt,

das Sonnenrad (41) einen zylindrischen Abschnitt (41 a) umfasst, dessen äußere, mit Zähnen versehene Wand einen inneren Umfangsabschnitt einer inneren Kupplungsscheibe (51a) der Direktkopplungskupplung (51) durch Keilverbindung in Eingriff nimmt,

eine hydraulische Betätigungsvorrichtung (8, 51b, 51c) zum Ineingriffnehmen der Direktkopplungskupplung (51) auf dem Getriebegehäuse oder auf einem stationären Bauglied angebracht ist, das an dem Getriebegehäuse befestigt ist, und

ein Axiallager (52) zum Ermöglichen einer relativen Drehung zwischen einem Kolben (51 c) der hydraulischen Betätigungsvorrichtung und der inneren oder äußeren Kupplungsscheibe der Direktkopplungskupplung (51) zwischen denselben angeordnet ist, um eine Axialkraft von dem Kolben zu der jeweiligen Kupplungsscheibe zu übertragen.

2. Eine Vorwärts-Rückwärts-Umschaltvorrichtung für ein stufenloses Getriebe, die folgende Merkmale aufweist:

einen Planetenradsatz (40) mit einem Sonnenrad (41), das mit einem Eingangsseitenbauglied (3) gekoppelt ist, einem Träger (44) und einem Hohlrad (42), wobei der Planetenradsatz als ein Doppel-Ritzel-Typ-Planetenradsatz gebildet ist, wobei der Träger (44) mit einem Ausgangsseitenbauglied (10) gekoppelt ist;

eine Rückbremse (50), die zwischen einem Getriebegehäuse und dem Hohlrad (42) angeordnet ist; und

eine Direktkopplungskupplung (51), die zwischen dem Träger (44) und dem Sonnenrad (41) angeordnet ist;

wobei die Rückbremse (50) und die Direktkopplungskupplung (51) selektiv in Eingriff sind, um eine Vorwärts-Rückwärts-Umschaltoperation durchzuführen, wobei die Vorwärts-Rückwärts-Umschaltvorrichtung **dadurch gekennzeichnet ist, dass**

das Sonnenrad (41) einen zylindrischen Abschnitt (41 a) umfasst, dessen äußere, mit Zähnen versehene Wand einen inneren Umfangsabschnitt einer inneren Kupplungsscheibe (51 a) der Direktkopplungskupplung (51) durch Keilverbindung in Eingriff nimmt,

eine hydraulische Betätigungsvorrichtung (8, 51 b, 51 c) zum Ineingriffnehmen der Direktkopplungskupplung (51) auf dem Getriebegehäuse oder auf einem stationären Bauglied angebracht ist, das an dem Getriebegehäuse befestigt ist, und

ein Axiallager (52) zum Ermöglichen einer relativen Drehung zwischen einem Kolben (51c) der hydraulischen Betätigungsvorrichtung und der inneren Kupplungsscheibe oder einer äußeren Kupplungsscheibe der Direktkopplungskupplung (51) zwischen denselben angeordnet ist, um eine Axialkraft von dem Kolben zu der jeweiligen Kupplungsscheibe zu übertragen.

3. Die Vorwärts-Rückwärts-Umschaltvorrichtung für das stufenlose Getriebe gemäß Anspruch 1 oder 2,
bei der die hydraulische Betätigungsvorrichtung für eine Ineingriffnahme der Direktkopplungskupplung (51) eine zylindrische Einrichtung umfasst, die an der Rückseite einer Ölpumpenabdeckung (8) gebildet ist, die an dem Getriebegehäuse befestigt ist und axial benachbart zu der Direktkopplungskupplung (51) angeordnet ist.

4. Die Vorwärts-Rückwärts-Umschaltvorrichtung für das stufenlose Getriebe gemäß Anspruch 1,
bei der der Träger (44) den zylindrischen Abschnitt (46b) umfasst, dessen äußere, mit Zähnen versehene Wand einen inneren Umfangsabschnitt einer Bremsscheibe der Rückbremse (50) durch Keilverbindung in Eingriff nimmt.

5. Die Vorwärts-Rückwärts-Umschaltvorrichtung für das stufenlose Getriebe gemäß Anspruch 4,
bei der die äußere, mit Zähnen versehene Wand und die innere, mit Zähnen versehene Wand des zylindrischen Abschnitts (46b) des Trägers (44) an Positionen gebildet sind, die sich in einer Axialrichtung überlappen.

6. Die Vorwärts-Rückwärts-Umschaltvorrichtung für das stufenlose Getriebe gemäß Anspruch 4 oder 5,
bei der ein zahnloser Abschnitt teilweise an der inneren, mit Zähnen versehenen Wand des zylindrischen Abschnitts (46b) des Trägers (44) gebildet ist, und
bei der ein Kolbenloch zum Tragen einer Kolbenwelle an einer Position des Trägers (44) gebildet ist, die dem zahnlosen Abschnitt in der Umfangsrichtung entspricht, so dass ein Radialabstand (R) zwischen dem Kolbenloch und einer Unteroberfläche des zahnlosen Abschnitts geringer ist als eine Radialhöhe (T) eines Zahns der inneren, mit Zähnen versehenen Wand.

7. Die Vorwärts-Rückwärts-Umschaltvorrichtung für das stufenlose Getriebe gemäß Anspruch 1 oder 2, bei der eine Anschlageinrichtung (8a) zum Anhalten eines axialen Endes der Bremsscheibe der Rückbremse (50) auf dem stationären Bauglied gebildet ist, das an dem Getriebegehäuse befestigt ist.

8. Die Vorwärts-Rückwärts-Umschaltvorrichtung für das stufenlose Getriebe gemäß Anspruch 1 oder 2, bei der eine Anschlageinrichtung zum Anhalten eines axialen Endes der Kupplungsscheibe der Direktkopplungskupplung (51) auf dem Träger (44) des Planetenradsatzes (40) gebildet ist.

**Revendications**

1. Dispositif de commutation avant-arrière pour une transmission variable en continu, comprenant:

   un ensemble d'engrenages planétaires (40) présentant un engrenage solaire (41) couplé à un élément du côté entrée (3), un support (44) et un engrenage annulaire (42) où l'ensemble d'engrenages planétaire est formé comme ensemble d'engrenages planétaires de type pignon, où l'engrenage annulaire (42) est couplé à un élément du côté sortie (10);
   un frein inverse (50) disposé entre un boîtier de transmission et le support (44), et
   un embrayage de couplage direct (51) disposé entre le support (44) et l'engrenage solaire (41);
   dans lequel le frein inverse (50) et l'embrayage de couplage direct (51) sont sélectivement en prise pour réaliser une opération de commutation avant-arrière, le dispositif de commutation avant-arrière étant **caractérisé par le fait que**
   le support (44) comporte une partie cylindrique (46b), dont la paroi dentée intérieure est en prise avec une partie périphérique extérieure d'un disque d'embrayage extérieur (51a) de l'embrayage de couplage direct (51) par connexion à clavette,
   l'engrenage solaire (41) comporte une partie cylindrique (41a) dont la paroi dentée extérieure vient en prise avec une partie périphérique intérieure d'un disque d'embrayage intérieur (51a) de l'embrayage de couplage direct (51) par connexion à clavette,
   un actionneur hydraulique (8, 51b. 51c) destiné à venir en prise avec l'embrayage de couplage direct (51) monté sur le boîtier de transmission ou sur un élément stationnaire fixé au boîtier de transmission, et
   un palier de butée (52) destiné à permettre la rotation relative entre un piston (51c) de l'actionneur hydraulique et le disque d'embrayage extérieur ou intérieur de l'embrayage de couplage direct (51) est disposé entre eux, pour transmettre une force axiale du piston ou disque d'embrayage respectif.

2. Dispositif de commutation avant-arrière pour une transmission variable en continu, comprenant:

   un ensemble d'engrenages planétaires (40) présentant un engrenage solaire (41) couplé à un élément du côté entrée (3), un support (44) et un engrenage annulaire (42), où l'ensemble d'engrenages planétaires est formé comme ensemble d'engrenages planétaires de type pignon double, où le support (44) est couplé à un élément du côté sortie;
   un frein inverse (50) disposé entre un boîtier de transmission et l'engrenage annulaire (42); et
   un embrayage de couplage direct (51) disposé entre le support (44) et l'engrenage solaire (41);
   dans lequel le frein inverse (50) et l'embrayage de couplage direct (51) sont sélectivement en prise pour réaliser une opération de commutation avant-arrière, le dispositif de commutation avant-arrière étant **caractérisé par le fait que**
   l'engrenage solaire (41) comporte une partie cylindrique (41a) dont la paroi d'entée vient en prise avec une partie périphérique intérieure d'un disque d'embrayage intérieur (51a) de l'embrayage de couplage direct (51) par connexion à clavette,
   un actionneur hydraulique (8, 51 b, 51c) destiné à venir en prise avec l'embrayage de couplage direct (51) est monté sur le boîtier de transmission ou sur un élément stationnaire fixé au boîtier de transmission, et
   un palier de butée (52) destiné à permettre la rotation relative entre un piston (51c) de l'actionneur hydraulique et le disque d'embrayage intérieur ou un disque d'embrayage extérieur de l'embrayage de couplage direct (51) est disposé entre eux, pour transmettre une force axiale du piston au disque d'embrayage respectif.

3. Dispositif de commutation avant-arrière pour la transmission variable en continu selon la revendication 1 ou 2, dans lequel l'actionneur hydraulique destiné à venir en prise avec l'embrayage de couplage direct (51) comporte un moyen de cylindre formé à l'arrière d'un couvercle de pompe à huile (8), qui est fixé au boîtier de transmission et est disposé axialement adjacent à l'embrayage de couplage direct (51).

4. Dispositif de commutation avant-arrière pour la transmission variable en continu selon la revendication 1, dans lequel le support (44) comporte la partie cylindrique (46b) dont la paroi dentée extérieure vient en prise avec une partie périphérique intérieure d'un disque de frein du frein inverse (50) par une connexion à clavette.

5. Dispositif de commutation avant-arrière pour la transmission variable en continu selon la revendication 4, dans lequel la paroi dentée extérieure et la paroi dentée intérieure de la partie cylindrique (46b) du support (44) sont formées à des positions qui se recouvrent dans une direction axiale.

6. Dispositif de commutation avant-arrière pour la transmission variable en continu selon la revendication 4 ou 5, dans lequel une partie sans dents est partiellement formée sur la paroi dentée intérieure de la partie cylindrique (46b) du support (44), et
dans lequel un trou de pignon destiné à supporter un arbre de pignon est formé à une position du support (44) correspondant à la partie sans dents dans la direction circonférentielle, de sorte que la distance radiale (R) entre le trou de pignon et une surface inférieure de la partie sans dents soit plus petite qu'une hauteur radiale (T) d'une dent de la paroi dentée intérieure.

7. Dispositif de commutation avant-arrière pour la transmission variable en continu selon la revendication 1 ou 2, dans lequel un moyen d'arrêt (8a) destiné à arrêter une extrémité axiale de frein du frein inverse (50) est formé sur l'élément stationnaire fixé au boîtier de transmission.

8. Dispositif de commutation avant-arrière pour la transmission variable en continu selon la revendication 1 ou 2, dans lequel un moyen d'arrêt (8a) destiné à arrêter une extrémité axiale du disque d'embrayage de l'embrayage de couplage direct (51) est formé sur le support (44) de l'ensemble d'engrenages planétaires (40).

Fig.1

Fig.2

Fig.3

EP 1 808 619 B1

## Fig.4

Fig.5

Fig.6

Fig.7

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002327828 A
- JP 10184834 A
- US 2002115523 A1